# EUROPEAN PATENT SPECIFICATION

(11) **EP 2 670 103 B1**
(45) Date of publication and mention of the grant of the patent: **05.08.2020**
(21) Application number: 12739124.1
(22) Date of filing: 19.01.2012
(51) Int. Cl.: H04L 27/26, H04B 10/548

(54) **ORTHOGONAL FREQUENCY DIVISION MULTIPLEXING PASSIVE OPTICAL NETWORK DATA TRANSMISSION METHOD AND OPTICAL LINE TERMINAL**
VERFAHREN ZUR OFDM-DATENÜBERTRAGUNG IN EINEM PASSIVEN OPTISCHEN NETZWERK UND OPTISCHER SPLITTER DAFÜR
PROCÉDÉ DE TRANSMISSION DE DONNÉES DE RÉSEAU OPTIQUE PASSIF DE MULTIPLEXAGE PAR DIVISION DE FRÉQUENCE ORTHOGONALE ET TERMINAL DE LIGNE OPTIQUE

(30) Priority: 25.01.2011 CN 201110027403
(43) Date of publication of application: 04.12.2013
(73) Proprietor: ZTE Corporation, Shenzhen, Guangdong 518057 (CN)
(72) Inventor: ZHU, Songlin, Shenzhen Guangdong 518057 (CN); GUO, Yong, Shenzhen Guangdong 518057 (CN); ZHANG, Weiliang, Shenzhen Guangdong 518057 (CN); GENG, Dan, Shenzhen Guangdong 518057 (CN); CHEN, Wu, Shenzhen Guangdong 518057 (CN)
(74) Representative: Lavoix
(86) International application number: PCT/CN2012/070581
(87) International publication number: WO 2012/100712

(56) References cited:
- WO-A1-2008/072347
- CN-A- 1 980 098
- CN-A- 101 119 163
- CN-A- 102 075 823
- US-A1- 2007 147 837
- US-A1- 2008 267 630
- US-A1- 2009 097 852
- WEI WEI ET AL: "PONIARD: A Programmable Optical Networking Infrastructure for Advanced Research and Development of Future Internet", JOURNAL OF LIGHTWAVE TECHNOLOGY, IEEE SERVICE CENTER, NEW YORK, NY, US, vol. 26, no. 3, 1 February 2009 (2009-02-01), pages 233-242, XP011251727, ISSN: 0733-8724
- DANIEL J C COURA ET AL: "A bandwidth scalable OFDM passive optical network for future access network", PHOTONIC NETWORK COMMUNICATIONS, KLUWER ACADEMIC PUBLISHERS, BO, vol. 18, no. 3, 11 August 2009 (2009-08-11), pages 409-416, XP019752860, ISSN: 1572-8188, DOI: 10.1007/S11107-009-0203-0

## Description

### Technical Field

The present document relates to the communication system, and in particular, to an Orthogonal Frequency Division Multiplexing (OFDM) Passive Optical Network (PON) system data transmission method and an optical line terminal.

### Background of the Related Art

The extensive application of the Orthogonal Frequency Division Multiplexing (OFDM) technology has injected new vitality into the optical communication. The OFDM technology dynamically allocates high-speed serial bits into orthogonal subcarriers , and meanwhile, each subcarrier adopts a high order modulation method, such as Quadrature Amplitude Modulation (QAM), which improves spectrum efficiency. More importantly, the duration of optical OFDM symbols on each subcarrier is relatively increased, and in addition with the adoption of the cyclic prefix, the inter-symbol interference due to chromatic dispersion and polarization mode dispersion in an optical fiber link is overcome effectively. An OFDM Passive Optical Network (PON) combines the OFDM technology with the PON technology, which produces multiple advantages, including: (1) resources of each subcarrier can be allocated dynamically: according to the difference of the frequency band environment and the application scenario, the number of bits carried by each subcarrier, the modulation format for each subcarrier, and the power of each subcarrier can be dynamically changed through a simple fast Fourier transform (FFT) algorithm ; (2) converging access of the wired signals and wireless signals combined can be realized: the OFDM, as the mature technology in the wireless communication, is applied widely to frameworks of World Interoperability for Microwave Access (WiMax), Wireless Fidelity (WiFi) and Long Term Evolution (LTE), thus, with the OFDM bearing PON signals, converging access of wired signals and wireless signals can be realized in an optical network unit (ONU); (3) the spectrum effectiveness of an access network is improved effectively: because of orthogonality between all subcarriers of the optical OFDM signals, not only mutual overlapping of frequency spectrums of all the subcarriers is allowed, but also the high order modulation, such as 16QAM, 8 Phase Shift Keying (8PSK) and so on, can be realized on each subcarrier through a simple constellation mapping algorithm; (4) an excellent anti-dispersion causes a smooth evolvement to an access network with an extra long distance: theoretically, the optical OFDM signals are not affected by the chromatic dispersion and the polarization mode dispersion in the link at all, thus the smooth transition from the optical access network to the access network with the extra long distance can be realized by adopting the OFDM-PON; (5) the cost pressure of optical devices is transferred to electric devices, the cost of a high-speed optical device is very high due to integration level and manufacturing process, etc. of the optical devices, optical modules and optical devices of 10G above is a great pressure for the access network at present, while the application of the OFDM technology can transfer the cost pressure of the optical devices to digital signal processing (DSP) with low price; thus, with the help of cost advantage and the integration level of the high-speed digital signal processing and high-frequency microwave devices, a rapid channel is provided for the access network to develop and popularize with a higher speed.

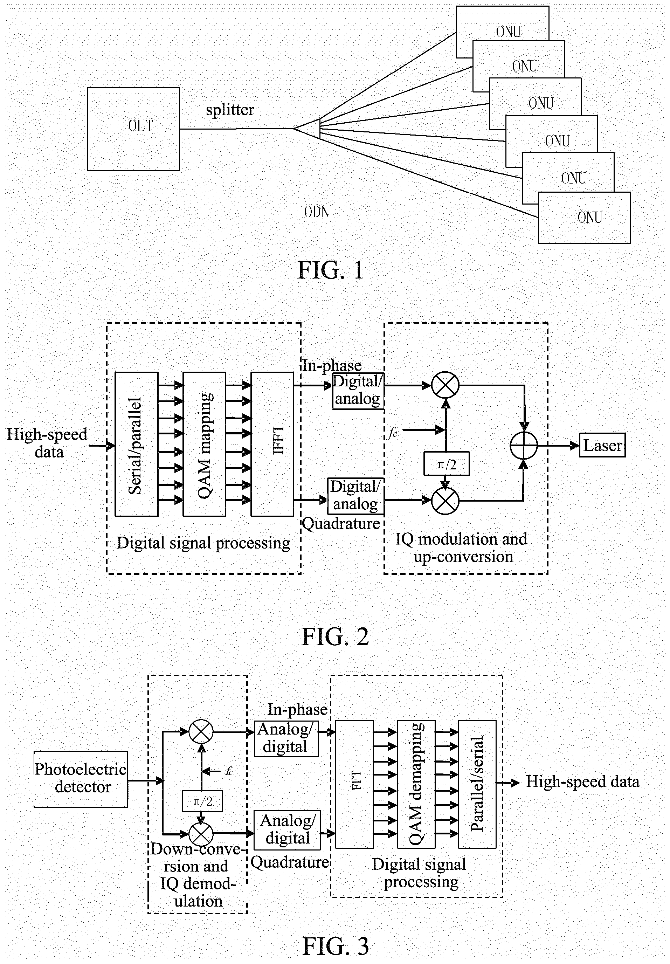

The OFDM PON scheme provided at present is mainly based on Single-band, and the network topology is shown in FIG. 1, including an Optical Line Terminal (OLT), optical network units (ONU) and an Optical Distribution Network (ODN).

The structure of a transmitter is shown in FIG. 2, and the transmitter includes a data transmission processing unit and an optical transmission processing unit (the laser shown in FIG. 2), wherein, the data transmission processing unit includes a digital signal processing (DSP) module, a digital-to-analog conversion module, and an IQ modulation and up-conversion module. The DSP module includes a serial/parallel conversion module, a QAM mapping module and an inverse fast Fourier transform (IFFT) module. After high-speed serial data from an upper layer processing unit enters the DSP module, at first the serial/parallel conversion is performed, wherein the high-speed serial data are converted into multi-path parallel low-speed data, and each path of the low-speed data corresponds to a subcarrier. After the serial/parallel conversion, each path of the data passes the QAM mapping to form a complex point of a constellation map, and each complex point is modulated onto one subcarrier. Through IFFT, the multi-path parallel data are modulated onto the corresponding subcarrier, so that a conversion from a frequency domain to a time domain is completed, and then digital OFDM baseband signals are output, wherein the digital OFDM baseband signals are divided into two components, In-phase and Quadrature, which correspond to a real part and an imaginary part of a symbol respectively. The digital-to-analog conversion module converts the digital OFDM baseband signals into analog OFDM baseband signals, and sends them to the IQ modulation and up-conversion module. The IQ modulation and up-conversion module modulates the In-phase component and the Quadrature component onto a radio frequency carrier respectively, so as to complete the radio frequency modulation. Finally, the radio frequency signals are modulated on the optical carrier through the optical transmission processing unit to be sent into the optic fiber and transmitted to an opposite terminal.

The structure of a receiver is shown in FIG. 3, and the receiver includes an optical receiving processing unit (an optical detector shown in FIG. 3) and a data receiving processing unit, wherein, the data receiving processing unit includes a down-conversion and IQ demodulation module, an analog-to-digital conversion module and a digital signal processing (DSP) module. The DSP module includes a fast Fourier transform (FFT) module, a QAM demapping module and a parallel/serial conversion module. The signals from the optical fiber are converted by the optical receiving processing unit to analog radio frequency electric signals. The analog radio frequency electric signals undergo the down-conversion and the IQ demodulation to form analog OFDM baseband signals which are divided into two components, In-phase and Quadrature. The analog OFDM baseband signals pass the analog-to-digital conversion module and are converted into digital OFDM baseband signals, and then are sent to the DSP module for processing. The DSP module performs the fast Fourier transform on the digital OFDM baseband signals at first, completes the conversion from the time domain to the frequency domain, recovers the data symbols modulated on each subcarrier, and later recovers the high-speed data through the QAM demapping and parallel/serial conversion, and outputs the data to the upper layer processing unit.

In the downstream direction (OLT→ONU), the OFDM modulation is performed on the whole downstream data frequency band which is as a Single-band and is divided into a plurality of orthogonal subcarriers. The data on which the OFDM modulation is performed are sent to all ONUs by ODN broadcast, each ONU must receive the OFDM data in the whole frequency band, and then receive the subcarrier distributed to the ONU through the demodulation. With such a single-band way, the requirement on the digital-to-analog conversion module at the sending end and the analog-to-digital conversion module at the receiving end is extremely high. For the downstream speed of 40G bps, even if it adopts the 16QAM modulation, then the digital-to-analog and analog-to-digital processing modules of at least over 10G bps are needed; thus the cost of the required devices are very high at present. On the other hand, in the upstream direction, because the upstream OFDM signals of each ONU need to be combined at an optical power distributer, a wavelength division multiplexing (WDM) way needs to be adopted to isolate the upstream signals of each ONU in order to avoid signal confliction and mutual interference. With this way, not only costs are too much, but also the original structure of the ODN need to be changed, and also the ONU is unable to be colorless.

Therefore, now the single-band OFDM PON scheme has problems on aspects of the device cost, the ODN compatibility and the ONU colorless.

The document "PONIARD: A Programmable Optical Networking Infrastructure for Advanced Research and Development of Future Internet" studies a novel programmable mechanism called optical OFDM/OFDMA for link virtualization.

US2008267630A1 describes OFDMA based PON architecture and its extension to long distance.

The document "A bandwidth scalable OFDM passive optical network for future access network" (Daniel Coura et al.) discloses a way of allocating OFDM bandwidth to different ONUs.

### Summary of the Invention

The technical problem solved by the present document is to provide a method for OFDM PON data transmission and an optical line terminal, so as to reduce the cost.

In order to solve the above problems, the present document provides an optical line terminal, and the optical line terminal (OLT) comprises an optical transmission processing unit and further comprises an OLT control unit, a serial-to-parallel conversion unit, a plurality of parallel downstream data transmission processing units and a combiner unit, wherein:
the OLT control unit is configured to divide a downstream data transmission frequency band into a plurality of sub-bands;
the serial-to-parallel conversion unit is configured to, according to the division of the OLT control unit, perform a serial-to-parallel conversion on data to be transmitted to obtain data of the plurality of sub-bands, and transmit data of each sub-band to a corresponding downstream data transmission processing unit;
the downstream data transmission processing unit is configured to map and modulate corresponding sub-band data and output radio frequency signals to the combiner unit;
the combiner unit is configured to combine radio frequency signals of the plurality of parallel downstream data transmission processing units and output combined signals to the optical transmission processing unit; and
the optical transmission processing unit is configured to convert the combined signals into optical signals and transmit the optical signals.

The OLT control unit is configured to divide the downstream data transmission frequency band into the plurality of sub-bands by a fixed way or a variable way.

The OLT control unit is further configured to set a guard band between the sub-bands.

The OLT control unit is further configured to assign the sub-bands to an optical network unit (ONU).

The OLT control unit is configured to allocate the bandwidth of a sub-band to one or more ONUs when assigning the sub-bands for the ONU.

The downstream data transmission processing unit comprises a digital signal processing module, a digital-to-analog conversion module and an IQ modulation and up-conversion module, wherein, the digital signal processing module is configured to perform mapping and inverse fast Fourier transform on the received sub-band data, and output digital signals; the digital-to-analog conversion module is configured to convert the digital signals into analog signals; and the IQ modulation and up-conversion module is configured to up-convert the analog signal to a sending frequency band occupied by a corresponding sub-band and then perform an IQ modulation, and output radio frequency signals.

The optical line terminal further comprises an optical burst receiving unit and an upstream data receiving processing unit, wherein: the optical burst receiving unit is configured to receive upstream burst data of a plurality of ONUs, and output the received upstream burst data to the upstream data receiving processing unit; and the upstream data receiving processing unit is configured to receive the upstream burst data, and perform demodulating and demapping.

The present document also provides a data transmission method, comprising:
an optical line terminal (OLT) dividing a downstream data transmission frequency band into a plurality of sub-bands;
according to the division, performing a serial-to-parallel conversion on data to be transmitted to obtain data of the plurality of sub-bands, mapping and modulating data of each sub-band individually, and outputting radio frequency signals;
combining the radio frequency signals of the plurality of sub-bands and obtaining combined signals; and
converting the combined signals into optical signals and transmitting the optical signals.

The step of dividing the downstream data transmission frequency band into the plurality of sub-bands comprises:
dividing the downstream data transmission frequency band into the plurality of sub-bands by a fixed way or a variable way.

The method further comprises: setting a guard band between the sub-bands when dividing the downstream data transmission frequency band into the plurality of sub-bands.

The method further comprises: the OLT assigning the sub-bands for an optical network unit (ONU).

The OLT allocates the bandwidth of a sub-band to one or more ONUs when assigning the sub-bands for the ONU.

The step of mapping and modulating data of each sub-band individually and outputting radio frequency signals comprises:
performing mapping and inverse fast Fourier transform on received sub-band data, and outputting digital signals; converting the digital signals into analog signals; and up-converting the analog signals to a sending frequency band occupied by a corresponding sub-band and then performing an IQ modulation, and outputting radio frequency signals.

The method further comprises: the OLT receiving upstream burst data of a plurality of ONUs, and performing demodulating and demapping.

In the present document, the downstream transmission frequency band is divided into a plurality of sub-bands, wherein the sampling rate of the digital-to-analog conversion and IQ modulation devices required by each sub-band is lower than the sampling rate required by the single-band scheme, thereby reducing the cost of system implementation.

### Brief Description of Drawings

- FIG. 1: is a structure diagram of a current single-band network topology;
- FIG. 2: is a structure diagram of a current single-band transmitter;
- FIG. 3: is a structure diagram of a current single-band receiver;
- FIG. 4: is a diagram of division of a multi-band downstream frequency spectrum;
- FIG. 5: is a structure diagram of a transmitting function of a multi-band downstream OLT;
- FIG. 6: is a structure diagram of a receiving function of a multi-band downstream ONU;
- FIG. 7: is a diagram of an upstream frequency spectrum;
- FIG. 8: is a structure diagram of a transmitting function of an upstream ONU;
- FIG. 9: is a structure diagram of a receiving function of an upstream OLT.

### Preferred Embodiments of the Invention

The present document provides a kind of multi-band OFDM PON network framework, through combination of the frequency division multiplexing (FDM) and the orthogonal frequency division multiplexing (OFDM) technology, the deployment cost of the OFDM PON is reduced, the compatibility to the ODN is enhanced and the colorless of the ONU is kept.

The OFDM technology adopts the way of the orthogonal subcarrier, and in its effective frequency band, the orthogonality between the subcarriers realizes the efficient frequency spectrum utilization. The orthogonality between the subcarriers has not only avoided the mutual interference between the subcarriers, but also fully improved the bandwidth availability ratio, thus the available bandwidth of the system is increased. Meanwhile, every subcarrier can adopt different high order modulation technology according to the characteristic of the band, such as, PSK, QAM, etc., and further the system bandwidth is extended. For the various bandwidth requirements of the terminal users, it can also realize the efficient bandwidth use efficiency through the dynamic distribution of the subcarriers. All these advantages benefit from the development and application of the devices, such as the high-speed digital signal processor and the high-speed digital-to-analog / analog-to-digital converter, etc.

The technical scheme of the present document is as follows:
a multi-band orthogonal frequency division multiplexing passive optical network is provided, wherein, an optical line terminal (OLT) uses a multi-band multiplexing technology in a downstream direction, and adopts the frequency division multiplexing (FDM) technology in the data frequency band in the downstream direction to divide the band into a plurality of sub-bands, and every sub-band performs the OFDM modulation individually. A plurality of ONUs can work in the same downstream sub-band at the same time, and the sub-band bandwidth sharing is realized by adopting the way of subcarrier distributing or statistical multiplexing. The ONU in an upstream direction can use the upstream multiple access based on the time division multiple access (TDMA), and also can use the orthogonal frequency division multiple access (OFDMA) in the upstream frequency band to realize the upstream multiple access, or combines with other multiple access technologies, such as the Wavelength division multiple access (WDMA), etc.

In the downstream direction:
in the downstream direction, the whole transmission band is divided into a plurality of sub-bands by a fixed way or a variable way on the basis of the requirement. In the fixed way, the width of every sub-band is the same or different, and they are isolated by using the guard band. The fixed way is favorable to the hardware design, and when the width of every sub-band is the same, it can use the data processing unit with the same specification, which is convenient for scale production and reducing the realization cost. In the variable way, the division of the sub-bands can be performed within a certain range according to the requirement, that is, the sub-band bandwidth is adjusted dynamically and flexibly in the range allowed by the equipment and specified by the standard.

Every sub-band performs the OFDM modulation independently. Every sub-band is divided into a plurality of orthogonal subcarriers, the plurality of orthogonal subcarriers are used for carrying the subscriber data, and this process includes the constellation mapping, the inverse fast Fourier transform (IFFT), etc., which is completed by the digital signal processing (DSP) module. The number of the subcarriers and the number of bits borne by every subcarrier are designed according to the system requirement.

The bandwidth of every sub-band can be shared by the plurality of optical network units (ONU), and the bandwidth dynamical sharing can be realized by subcarrier dynamic distributing or statistical multiplexing. The bandwidth of every ONU is determined by the number of the distributed subcarriers and the number of bits borne by the subcarrier, and the distribution process is dynamically controlled in real time by the optical line terminal (OLT) control unit according to the user requirement and the line transmission quality.

In the downstream direction, the downstream multiplexing is realized by the way of sub-band + subcarrier, and the operator can set the ONUs into different sub-bands according to a plurality of factors such as a distance range, a network type, a user type or a service type, etc. In every sub-band, the plurality of ONUs can realize the multiplexing and the bandwidth sharing through the dynamically distributed subcarriers.

In the downstream direction, an ONU receiver works in a certain sub-band in the fixed way or the adjustable way. In the fixed way, the ONU receiver receives data of a certain sub-band regularly, and its receiver parameters are factory default and non-adjustable, so the user can only select an ONU working in a certain sub-band. In the adjustable way, the ONU receiver can adjust to the corresponding sub-band receiving range according to the control protocol command of the OLT; all ONUs work in the default sub-band during initializating, and after receiving the control protocol command transmitted by the OLT control unit, the ONU tunes the ONU receiver parameters to make the ONU work in the sub-band distributed by the OLT.

The OLT provided in the present document includes an OLT control unit, a serial-to-parallel conversion unit, a plurality of parallel downstream data transmission processing units, a combiner unit and an optical transmission processing unit, wherein:
the OLT control unit is configured to: divide the downstream data transmission frequency band into a plurality of sub-bands by a fixed way or a variable way, and, control communication among all ONUs, including ONU registering, authorizing, framing, ONU communication control and management, etc. After the ONU is online, the OLT control unit will distribute the sub-bands and subcarriers for the ONU according to a current state of the system and a management instruction. When dividing the sub-bands, a guard band is also set. The bandwidth of the same sub-band is distributed to a plurality of ONUs when distributing the sub-bands for the ONUs.
The serial-to-parallel conversion unit, according to the division of the OLT control unit, performs the serial-to-parallel conversion on the data to be transmitted to obtain the data of a plurality of sub-bands, and transmits the data of every sub-band to the corresponding downstream data transmission processing unit;
the number of the downstream data transmission processing units is the same with the number of the sub-bands, and every downstream data transmission processing unit is responsible for dealing with the data of one sub-band, and performs mapping and modulation on the corresponding sub-band data, and outputs the radio frequency signals to the combiner unit;
the combiner unit is configured to combine the radio frequency signals of the plurality of downstream data transmission processing units, and output the combined signals to the optical transmission processing unit;
the optical transmission processing unit is configured to convert the combined signals into the optical signals and then transmit the optical signals.

Furthermore, the downstream data transmission processing unit of the OLT includes a digital signal processing (DSP) module, a digital-to-analog conversion module, and an IQ modulation and up-conversion module, wherein:
the digital signal processing module is configured to perform mapping and inverse fast Fourier transform on the received data of the corresponding sub-bands, and output the digital signals;
the digital-to-analog conversion module is configured to convert the digital signals into the analog signals;
the IQ modulation and up-conversion module is configured to up-convert the analog signals to a transmitting frequency band occupied by a corresponding sub-band, and then perform an IQ modulation, and output the radio frequency signals.

The digital signal processing module includes a serial/parallel conversion processing module, an orthogonal amplitude modulation (QAM) mapping processing module and an inverse fast Fourier transform module (IFFT) processing module. Its structure and function refer to the related art, and will not be explained here.

The ONU includes an ONU control unit, a downstream data receiving processing unit and an optical receiving processing unit, wherein:
the ONU control unit is configured to receive the protocol command transmitted by the OLT control unit, and translate the protocol content into the ONU control parameters and transmit the parameters to every processing unit of the ONU.
The optical receiving processing unit is configured to receive the downstream optical signals and convert them to the radio frequency signals to transmit to the downstream data receiving processing unit;
the downstream data receiving processing unit includes a band-pass filter module, a down-conversion and IQ demodulation processing module, an analog-to-digital conversion module and a digital signal processing module.

The band-pass filter module, during the ONU initialization, adjusts the filtering parameters of the band-pass filter according to the command of the OLT control unit, that is, the center frequency of the band-pass filter is the center frequency of the sub-band distributed by the ONU.

The digital signal processing module of the ONU includes a fast Fourier transform (FFT) processing module, a QAM demapping processing module and a parallel/serial conversion processing module.

In the upstream direction:
in the upstream direction, the method based on the time division multiple access (TDMA) can be used to realize the upstream multiple access, and also the multiple access technology, such as orthogonal frequency division multiple access (OFDMA) or wavelength division multiple access (WDMA) or code division multiple access (CDMA), etc can be combined.

The time division multiple access refers to that, when transmitting in the upstream, every ONU transmits in turn at the timeslot specified by the OLT, thus preventing the upstream data from conflicting. Every ONU must work under a unitary clock, and after strictly ranging and synchronizing, it is to ensure that data can be transmitted in a correct time slot. With the way of TDMA, every ONU uses a burst transmitter, which realized the TDMA, and the ONU has the colorless.

The TDMA is combined with the OFDMA, which refers to that the ONU can perform the OFDM modulation, and the plurality of ONUs can be based on the OFDMA at first, and then further based on the TDMA on every subcarrier.

The TDMA is combined with the WDMA, which refers to that the plurality of ONUs can adopt the same upstream wavelength and then further adopt the TDMA.

The present document provides an optical network unit, including an upstream data transmission processing unit and an optical burst transmitting unit, wherein:
the upstream data transmission processing unit is configured to perform mapping and modulation on the data to be transmitted, and output the radio frequency signals to the optical burst transmitting unit;
the optical burst transmitting unit is configured to convert the radio frequency signals into the optical signals, and transmit the data on the time slot specified by the optical line terminal.

The present document provides an optical line terminal, including an optical burst receiving unit and an upstream data receiving processing unit, wherein:
the optical burst receiving unit is configured to receive upstream burst data of a plurality of ONUs to output to the upstream data receiving processing unit; and
the upstream data receiving processing unit is configured to receive the upstream burst data, and perform demodulating and demapping.

The present document provides a data transmission method, including:
an optical line terminal (OLT) dividing a downstream data transmission frequency band into a plurality of sub-bands;
according to the division, performing a serial-to-parallel conversion on data to be transmitted to obtain data of the plurality of sub-bands, mapping and modulating data of every sub-band individually, and outputting radio frequency signals;
combining the radio frequency signals of the plurality of sub-bands and obtaining combined signals; and
converting the combined signals into optical signals and transmitting the optical signals.

Wherein, the step of dividing the downstream data transmission frequency band into the plurality of sub-bands includes:
dividing the downstream data transmission frequency band into the plurality of sub-bands by a fixed way or a variable way.

Wherein, a guard band is set between the sub-bands when dividing the downstream data transmission frequency band into the plurality of sub-bands.

Wherein, the OLT allocates a bandwidth of a sub-band to one or more ONUs when assigning the sub-band for the ONUs.

Wherein, the step of mapping and modulating data of every sub-band individually and outputting radio frequency signals includes,
performing mapping and inverse fast Fourier transform on received sub-band data, and outputting digital signals;
converting the digital signals to analog signals; and
up-converting the analog signals to a transmitting frequency band occupied by a corresponding sub-band, and then performing an IQ modulation, and outputting radio frequency signals.

Wherein, the OLT further receives upstream burst data of a plurality of ONUs, and performs demodulating and demapping.

The present document is further explained through the specific embodiment hereinafter.

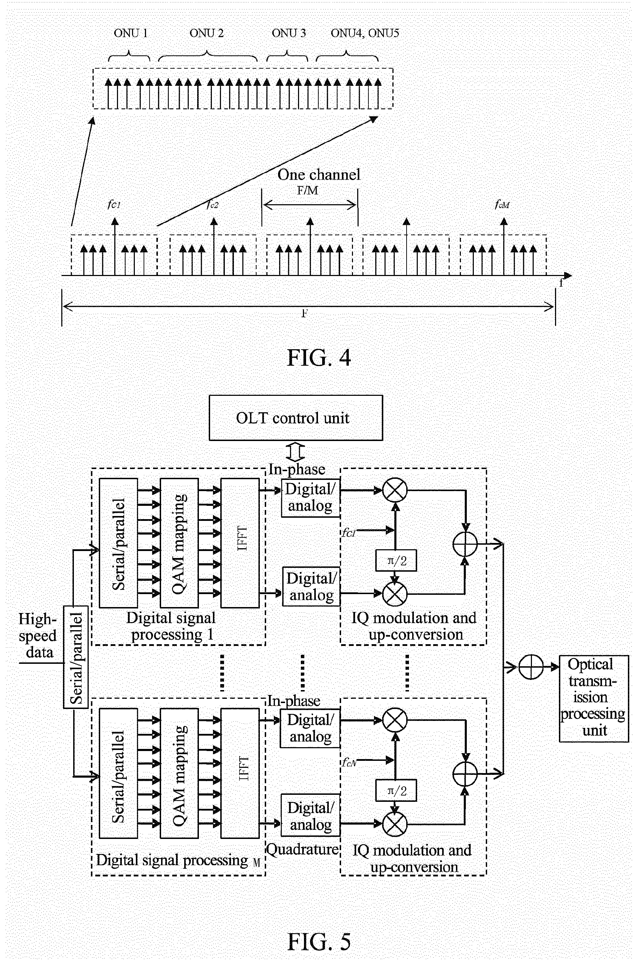

In the embodiment, the entire downstream frequency bandwidth is F, and the number of the sub-bands is M. In the fixed distribution mode, the width of every sub-band is F/M. The center frequency of every sub-band is R_{f} with F/M as an interval. Every sub-band is divided into a plurality of subcarriers, in which the OFDM modulation is performed individually. FIG. 4 shows the situations of 5 ONUs, wherein, M =4, and wherein, the ONU4 shares the subcarrier bandwidth with the ONU5 by the way of statistically multiplexing. In the flexible distribution mode, the width of the sub-band can be adjusted flexibly within a specified range according to the requirement of the user and the operator, that is, it can be adjusted in the range allowed by the equipment and specified by the standard.

The plurality of ONUs can share the bandwidth of a sub-band, and the OLT dynamically assigning a varying number of subcarriers to every ONU according to the requirement and the band quality, as shown by ONU1-ONU4, 5 in FIG. 4. And bandwidth sharing can be realized in combination with the statistical multiplexing technology, that is, the ONU distinguishes its own received data according to the identification number (ID) carried by the data, as shown by ONU4 and ONU5 in FIG. 4.

In the down direction, the OLT is divided into M parallel data transmission processing units according to the number of the sub-bands, and every data transmission processing unit deals with data of one sub-band, as shown in FIG. 5. M serial/parallel conversion is performed on the high-speed data from the upper layer processing unit according to the sub-band, and the data sent to every sub-band are corresponded to the corresponding data transmission processing unit respectively. In every data transmission processing unit, the serial/parallel conversion is performed according to the subcarrier N. Through m-QAM mapping and N-point IFFT, the OFDM subcarrier modulation is completed, to form the digital baseband OFDM signals. In the digital-to-analog conversion module, the In-phase and Quadrature components of the digital baseband OFDM signal are converted into the In-phase and Quadrature components of the analog baseband OFDM symbol respectively. The analog baseband OFDM signals are modulated onto the radio frequency corresponding to a particular sub-band through the IQ modulation and up-conversion module. All the OFDM radio frequency and modulation signals of the M sub-bands are combined, and then are modulated onto the optical carriers for transmitting. In this way, the sampling rate of the D/A conversion and the IQ modulation devices required by every sub-band are lower than the sampling rate required by the single-band scheme, thus reducing the cost of system realization. The OLT control unit completes the communication control for the ONU, including registering, authorizing and distributing the sub-band parameters etc.

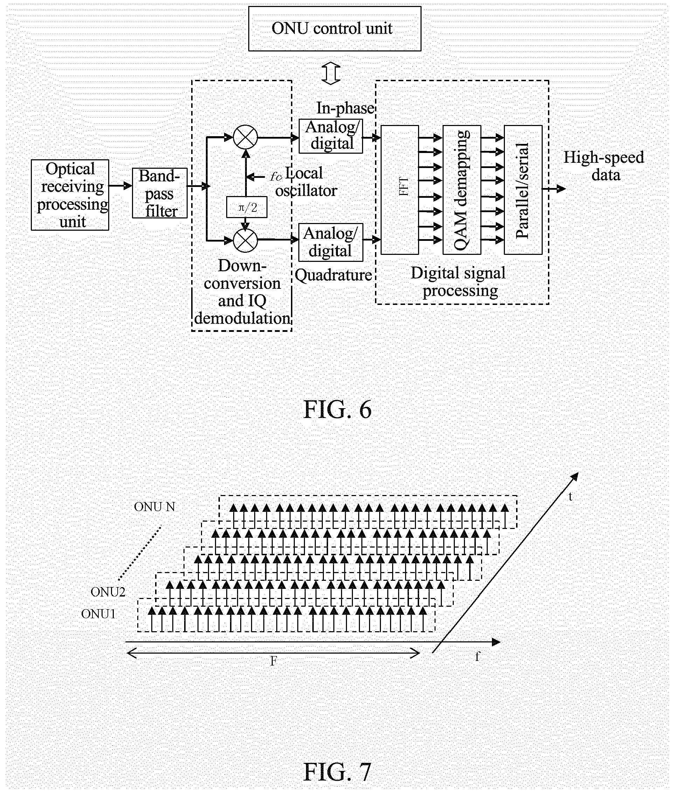

In the downstream direction, the plurality of ONUs can work in a sub-band, and the number of the ONUs in the sub-band is decided by the current sub-band bandwidth. The ONU receives the sub-band data, and finishes the OFDM demodulation, as shown in FIG. 6. In the present embodiment, the ONU is configured fixedly, that is, it receives data of a certain sub-band regularly. After the ONU finishes the initialization, it can receive the downstream data. The optical receiving processing unit performs the demodulation on the entire downstream frequency spectrum, and it is to convert into the electric signals. The band-pass filter module filters the sub-band data, and through the down-conversion and IQ demodulation, outputs the analog OFDM baseband signals, including two components, In-phase and Quadrature components. Through the analog-to-digital conversion module, it is to convert to the digital OFDM baseband signals. The DSP module finishes performing the N-point FFT and m-QAM demapping operation on the OFDM baseband signals, and then finishes the OFDM demodulation of the current sub-band through the parallel/serial conversion finally. Because every ONU only receives the current sub-band data, the required device speed is reduced, thus the cost is reduced too. The ONU control unit is responsible for receiving the control protocol command from the OLT control unit, and sends the relevant parameters to every processing unit of the ONU.

In the upstream direction, the time division multiple access (TDMA) technology is used, as shown in FIG. 7. The ONU 1 - ONU N transmit the data at different upstream times respectively.

In the upstream direction, the OFDM modulation mode can be adopted to expand the bandwidth during the transmitting time of each ONU, as shown in FIG. 7.

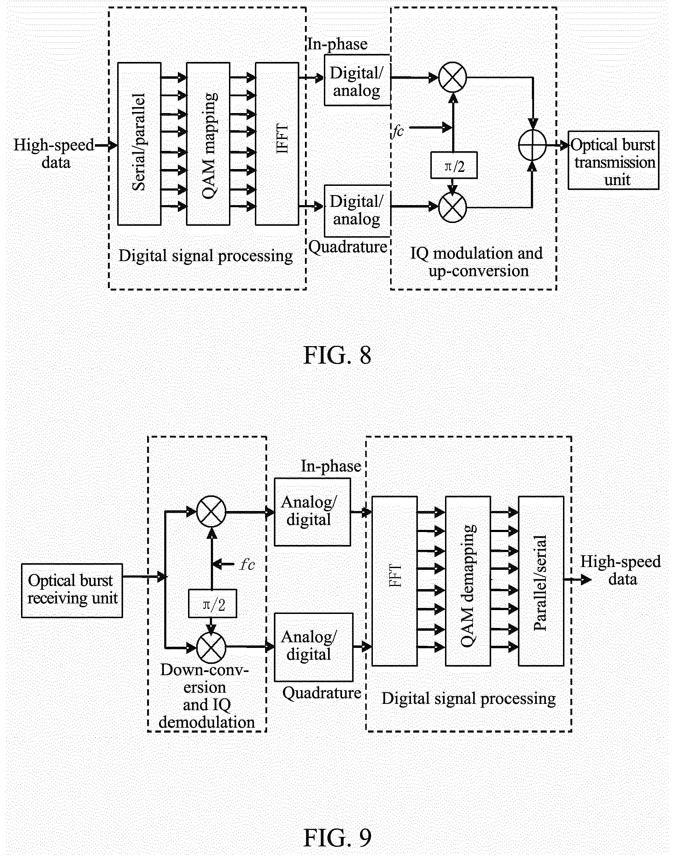

In the upstream direction, if the TDM +OFDM modulation mode is used, then the ONU finishes the OFDM modulation by adopting the single-band way for the upstream data in the entire upstream frequency band, and sends the upstream data at the time slots specified by the OLT, as shown in FIG. 8. The N serial/parallel conversion are performed on the data from the upper layer data processing unit according to the subcarrier at first, and then the data are converted into the digital baseband OFDM signals through m-QAM mapping and N-point IFFT. In the digital-to-analog conversion module, the digital baseband OFDM signals are converted into the analog baseband OFDM signals. The OFDM radio frequency modulation is completed through the IQ modulation and up-conversion modulation, and the upstream transmission of the radio frequency OFDM signals is completed through the optical burst transmitting unit in the designated time slots finally. The ONU upstream transmission is based on the time division multiple access, which is compatible with the original ODN network very well, and the colorless of the ONU is kept.

The optical burst receiving unit in the OLT in the upstream direction receives the upstream burst data from different ONUs, as shown in FIG. 9.

If the OFDM modulation technology is adopted in the upstream direction, then the radio frequency down-conversion and IQ demodulation is completed for the data of the optical burst receiving unit of the OLT finish by the down-conversion and IQ demodulation module, and the analog OFDM baseband signals are output, including the In-phase and Quadrature components. By the analog-to-digital conversion module, the analog OFDM baseband signals are converted into the digital OFDM baseband signals, including the In-phase and Quadrature components. The N-point FFT and m-QAM demapping is performed on the digital baseband OFDM signals by the digital signal processing module, and finally the parallel/serial conversion is performed to finish the OFDM demodulation, and the signals are output to an upper layer data processing unit. Because the upstream is based on TDMA technology, the OLT uses the optical burst receiving unit, thus avoiding using the devices of wave division and frequency division, and keeping the compatibility with the original ODN and reducing the realization cost.

### Industrial Applicability

Compared with the related art, in the present document, the downstream transmission frequency band is divided into a plurality of sub-bands, sampling rates of the digital-to-analog conversion and IQ modulation devices required by each sub-band are lower than the sampling rates of devices required by the single-band scheme, thereby reducing the cost of system implementation.

## Claims

1. An optical line terminal OLT , **characterized by** comprising an optical transmission processing unit, wherein, the OLT further comprises an OLT control unit, a serial-to-parallel conversion unit, a plurality of parallel downstream data transmission processing units and a combiner unit, wherein:
the OLT control unit is configured to divide a downstream data transmission frequency band into a plurality of sub-bands;
the serial-to-parallel conversion unit is configured to, according to the division by the OLT control unit, perform a serial-to-parallel conversion on data to be transmitted to obtain data for each of the plurality of sub-bands, and transmit data of each sub-band to a corresponding downstream data transmission processing unit; each of the downstream data transmission processing unit is configured to map and OFDM modulate corresponding sub-band data and output corresponding radio frequency signals to the combiner unit;
the combiner unit is configured to combine radio frequency signals of the plurality of parallel downstream data transmission processing units and output the combined signal to the optical transmission processing unit; and
the optical transmission processing unit is configured to convert the combined signal into optical signals to transmit.

2. The optical line terminal according to claim 1, wherein, the OLT control unit is configured to divide the downstream data transmission frequency band into the plurality of sub-bands by a fixed way or a variable way.

3. The optical line terminal according to claim 1, wherein, the OLT control unit is further configured to set a guard band between the sub-bands.

4. The optical line terminal according to claim 1, wherein, the OLT control unit is further configured to assign the sub-bands for an optical network unit (ONU).

5. The optical line terminal according to claim 4, wherein, the OLT control unit is configured to allocate bandwidth of a sub-band to one or more ONUs when assigning the sub-bands to the ONU.

6. The optical line terminal according to claim 1, wherein, the downstream data transmission processing unit comprises a digital signal processing module, a digital-to-analog conversion module and an IQ modulation and up-conversion module, wherein,
the digital signal processing module is configured to perform mapping and inverse fast Fourier transform on received sub-band data, and output digital signals;
the digital-to-analog conversion module is configured to convert the digital signals into analog signals; and
the IQ modulation and up-conversion module is configured to up-convert the analog signals to a sending frequency band occupied by a corresponding sub-band and then perform an IQ modulation, and output radio frequency signals.

7. The optical line terminal according to claim 1, further comprising an optical burst receiving unit and an upstream data receiving processing unit, wherein:
the optical burst receiving unit is configured to receive upstream burst data of a plurality of ONUs, and output the received upstream burst data to the upstream data receiving processing unit; and
the upstream data receiving processing unit is configured to receive the upstream burst data, and perform demodulating and demapping.

8. A data transmission method, **characterized by** comprising:
an optical line terminal ,OLT, dividing a downstream data transmission frequency band into a plurality of sub-bands;
according to the division, performing a serial-to-parallel conversion on data to be transmitted to obtain data for each of the plurality of sub-bands, mapping and OFDM modulating data of each sub-band individually, and outputting corresponding radio frequency signals;
combining the radio frequency signals of the plurality of sub-bands and obtaining a combined signal; and
converting the combined signal into an optical signal to transmit.

9. The method according to claim 8, wherein, the step of dividing a downstream data transmission frequency band into a plurality of sub-bands comprises:
dividing the downstream data transmission frequency band into the plurality of sub-bands by a fixed way or a variable way.

10. The method according to claim 8, further comprising: setting a guard band between the sub-bands when dividing the downstream data transmission frequency band into the plurality of sub-bands.

11. The method according to claim 8, further comprising: the OLT assigning the sub-bands for an optical network unit, ONU.

12. The method according to claim 11, wherein, the OLT allocates bandwidth of a sub-band to one or more ONUs when assigning the sub-bands for the ONU.

13. The method according to claim 8, wherein, the step of mapping and modulating data of each sub-band individually and outputting radio frequency signals comprises:
performing mapping and inverse fast Fourier transform on received sub-band data, and outputting digital signals;
converting the digital signals into analog signals; and
up-converting the analog signals to a sending frequency band occupied by a corresponding sub-band and then performing an IQ modulation, and outputting radio frequency signals.

14. The method according to claim 8, further comprising:
the OLT receiving upstream burst data of a plurality of ONUs, and performing demodulating and demapping.

## Patentansprüche

1. Glasfaser-Endgerät (Optical Line Terminal), OLT, **dadurch gekennzeichnet, dass** er eine optische Übertragungs-Verarbeitungseinheit umfasst, wobei der OLT weiter eine OLT-Steuerungseinheit, eine Seriell-Parallel-Umwandlungseinheit, eine Vielzahl von parallelen nachgelagerten Datenübertragungs-Verarbeitungseinheiten und eine Kombiniereinheit umfasst, wobei
die OLT-Steuerungseinheit konfiguriert ist, um ein nachgelagertes Datenübertragungs-Frequenzband in eine Vielzahl Teilbändern zu unterteilen;
die Seriell-Parallel-Umwandlungseinheit konfiguriert ist, um, gemäß der Unterteilung durch die OLT-Steuerungseinheit, eine Seriell-Parallel-Umwandlung an Daten durchzuführen, die übertragen werden sollen, um Daten für jede der Vielzahl von Teilbändern zu erhalten und Daten von jedem Teilband an eine entsprechende nachgelagerte Datenübertragungs-Verarbeitungseinheit zu übertragen;
jede der nachgelagerten Datenübertragungs-Verarbeitungseinheiten konfiguriert ist, um entsprechende Teilbanddaten abzubilden und einer OFDM-Modulierung zu unterziehen und entsprechende Funkfrequenzsignale an die Kombiniereinheit auszugeben;
die Kombiniereinheit konfiguriert ist, um Funkfrequenzsignale der Vielzahl von parallelen nachgelagerten Datenübertragungs-Verarbeitungseinheiten zu kombinieren und das kombinierte Signal an die optische Übertragungs-Verarbeitungseinheit auszugeben;und
die optische Übertragungs-Verarbeitungseinheit konfiguriert ist, um das kombinierte Signal in optische Signale, die übertragen werden sollen, umzuwandeln.

2. Glasfaser-Endgerät nach Anspruch 1, wobei die OLT-Steuerungseinheit konfiguriert ist, um das nachgelagerte Datenübertragungs-Frequenzband in eine Vielzahl von Teilbändern durch einen festen Weg oder einen variablen Weg zu unterteilen.

3. Glasfaser-Endgerät nach Anspruch 1, wobei die OLT-Steuerungseinheit weiter konfiguriert ist, um ein Schutzband zwischen die Teilbänder zu setzen.

4. Glasfaser-Endgerät nach Anspruch 1, wobei die OLT-Steuerungseinheit weiter konfiguriert ist, um die Teilbänder für eine optische Netzwerkeinheit (Optical Network Unit - ONU) zuzuweisen.

5. Glasfaser-Endgerät nach Anspruch 4, wobei die OLT-Steuerungseinheit konfiguriert ist, um Bandbreite eines Teilbands einem oder mehreren ONUs zuzuordnen, wenn die Teilbänder der ONU zugewiesen werden.

6. Glasfaser-Endgerät nach Anspruch 1, wobei die nachgelagerte Datenübertragungs-Verarbeitungseinheit ein digitales Signalverarbeitungsmodul, ein Digital-Analog-Umwandlungsmodul und ein IQ-Modulierungs- und Hochkonvertierungsmodul umfasst, wobei
das digitale Signalverarbeitungsmodul konfiguriert ist, um eine Abbildung und eine inverse schnelle Fourier-Transformation auf erhaltenen Teilbanddaten durchzuführen und digitale Signale auszugeben;
das Digital-Analog-Umwandlungsmodul konfiguriert ist, um die digitalen Signale in analoge Signale umzuwandeln; und
das IQ-Modulierungs- und Hochkonvertierungsmodul konfiguriert ist, um die analogen Signale in ein Sendefrequenzband hochzukonvertieren, das von einem entsprechenden Teilband besetzt ist, und dann eine IQ-Modulierung durchzuführen und Funkfrequenzsignale auszugeben.

7. Glasfaser-Endgerät nach Anspruch 1, weiter umfassend eine optische Burst-Empfangseinheit und eine vorgelagerte Datenempfangs-Verarbeitungseinheit, wobei
die optische Burst-Empfangseinheit konfiguriert ist, um vorgelagerte Burstdaten einer Vielzahl von ONUs zu empfangen und die empfangenen vorgelagerten Burstdaten an die vorgelagerte Datenempfangs-Verarbeitungseinheit, auszugeben; und
an die vorgelagerte Datenempfangs-Verarbeitungseinheit konfiguriert ist, um die vorgelagerten Burstdaten zu empfangen und um das Demodulieren und Rückabbilden durchzuführen.

8. Datenübertragungsverfahren, **dadurch gekennzeichnet, dass** es Folgendes umfasst:
ein Glasfaser-Endgerät (Optical Line Terminal), OLT, der ein nachgelagertes Datenübertragungs-Frequenzband in eine Vielzahl von Teilbändern unterteilt;
gemäß der Unterteilung Durchführen einer Seriell-Parallel-Umwandlung auf Daten, die übertragen werden sollen, um Daten für jede der Vielzahl von Teilbändern zu erhalten, Abbilden und OFDM-Modulieren von Daten jedes Teilbands einzeln, und Ausgeben von entsprechenden Funkfrequenzsignalen;
Kombinieren der Funkfrequenzsignale der Vielzahl von Teilbändern und Erhalten eines kombinierten Signals; und
Umwandeln des kombinierten Signals in ein optisches Signal, das übertragen werden soll.

9. Verfahren nach Anspruch 8, wobei der Schritt des Unterteilens eines nachgelagerten Datenübertragungs-Frequenzbands in eine Vielzahl von Teilbändern Folgendes umfasst:
Unterteilen des nachgelagerten Datenübertragungs-Frequenzbands in eine Vielzahl von Teilbändern durch einen festen Weg oder einen variablen Weg.

10. Verfahren nach Anspruch 8, weiter umfassend: Setzen eines Schutzbands zwischen die Teilbänder, wenn das nachgelagerte Datenübertragungs-Frequenzband in eine Vielzahl von Teilbändern unterteilt wird.

11. Verfahren nach Anspruch 8, weiter umfassend: Zuweisen, durch den OLT, der Teilbänder für eine optische Netzwerkeinheit (Optical Network Unit), ONU.

12. Verfahren nach Anspruch 11, wobei der OLT Bandbreite eines Teilbands einem oder mehreren ONUs zuordnet, wenn die Teilbänder der ONU zugewiesen werden.

13. Verfahren nach Anspruch 8, wobei der Schritt des Abbildens und Modulierens von Daten jedes Teilbands einzeln und das Ausgeben von Funkfrequenzsignalen Folgendes umfasst:
Durchführen des Abbildens und einer inversen schnellen Fourier-Transformation auf erhaltenen Teilbanddaten und Ausgeben von digitalen Signalen;
Umwandeln der digitalen Signale in analoge Signale; und
Hochkonvertieren der analogen Signale in ein Sendefrequenzband, das von einem entsprechenden Teilband besetzt ist, und dann Durchführen einer IQ-Modulierung und Ausgeben von Funkfrequenzsignalen.

14. Verfahren nach Anspruch 8, weiter umfassend:
Empfangen, von der OLT, von vorgelagerten Burstdaten einer Vielzahl von ONUs und Durchführen des Demodulierens und Rückabbildens.

## Revendications

1. Terminal de ligne optique, OLT, **caractérisé en ce qu'**il comprend une unité de traitement de transmission optique, dans lequel, le terminal OLT comprend en outre une unité de commande de terminal OLT, une unité de conversion série-parallèle, une pluralité d'unités de traitement de transmission de données en aval parallèles, et une unité de combinaison, dans lequel :
l'unité de commande de terminal OLT est configurée de manière à diviser une bande de fréquence de transmission de données en aval en une pluralité de sous-bandes ;
l'unité de conversion série-parallèle est configurée de manière à, selon la division mise en oeuvre par l'unité de commande de terminal OLT, mettre en oeuvre une conversion série-parallèle sur des données à transmettre, en vue d'obtenir des données pour chacune de la pluralité de sous-bandes, et à transmettre des données de chaque sous-bande à une unité de traitement de transmission de données en aval correspondante ;
chacune des unités de traitement de transmission de données en aval parallèles est configurée de manière à mettre en correspondance et à moduler, par multiplexage par répartition orthogonale de la fréquence, OFDM, des données de sous-bandes correspondantes, et à fournir en sortie des signaux radiofréquence correspondants à l'unité de combinaison ;
l'unité de combinaison est configurée de manière à combiner des signaux radiofréquence de la pluralité d'unités de traitement de transmission de données en aval parallèles et à fournir en sortie le signal combiné à l'unité de traitement de transmission optique ; et
l'unité de traitement de transmission optique est configurée de manière à convertir le signal combiné en signaux optiques à transmettre.

2. Terminal de ligne optique selon la revendication 1, dans lequel l'unité de commande de terminal OLT est configurée de manière à diviser la bande de fréquence de transmission de données en aval en une pluralité de sous-bandes, d'une manière fixe ou variable.

3. Terminal de ligne optique selon la revendication 1, dans lequel l'unité de commande de terminal OLT est en outre configurée de manière à définir une bande de garde entre les sous-bandes.

4. Terminal de ligne optique selon la revendication 1, dans lequel l'unité de commande de terminal OLT est en outre configurée de manière à affecter les sous-bandes à une unité de réseau optique, ONU.

5. Terminal de ligne optique selon la revendication 4, dans lequel l'unité de commande de terminal OLT est configurée de manière à affecter une largeur de bande d'une sous-bande à une ou plusieurs unités ONU dans le cadre de l'affectation des sous-bandes à l'unité ONU.

6. Terminal de ligne optique selon la revendication 1, dans lequel l'unité de traitement de transmission de données en aval comprend un module de traitement de signal numérique, un module de conversion numérique-analogique et un module de conversion par élévation et de modulation IQ, dans lequel,
le module de traitement de signal numérique est configuré de manière à mettre en oeuvre une mise en correspondance et une transformée de Fourier rapide inverse sur des données de sous-bandes reçues, et à fournir en sortie des signaux numériques ;
le module de conversion numérique-analogique est configuré de manière à convertir les signaux numériques en des signaux analogiques ; et
le module de conversion par élévation et de modulation IQ est configuré de manière à convertir par élévation les signaux analogiques en une bande de fréquence d'émission occupée par une sous-bande correspondante, et ensuite à mettre en œuvre une modulation IQ, et à fournir en sortie des signaux radiofréquence.

7. Terminal de ligne optique selon la revendication 1, comprenant en outre une unité de réception de salve optique et une unité de traitement de réception de données en amont, dans lequel :
l'unité de réception de salve optique est configurée de manière à recevoir des données en salve en amont d'une pluralité d'unités ONU, et à fournir en sortie les données en salve en amont reçues à l'unité de traitement de réception de données en amont ; et
l'unité de traitement de réception de données en amont est configurée de manière à recevoir les données en salve en amont, et à mettre en œuvre une démodulation et un démappage.

8. Procédé de transmission de données, **caractérisé en ce qu'**il comprend les étapes ci-dessous consistant à, ou dans lesquelles :
un terminal de ligne optique, OLT, divise une bande de fréquence de transmission de données en aval en une pluralité de sous-bandes ;
selon la division, mettre en œuvre une conversion série-parallèle sur des données à transmettre, en vue d'obtenir des données pour chacune de la pluralité de sous-bandes, mettre en correspondance et moduler, par multiplexage OFDM, des données de chaque sous-bande individuellement, et fournir en sortie des signaux radiofréquence correspondants ;
combiner les signaux radiofréquence de la pluralité de sous-bandes et obtenir un signal combiné ; et
convertir le signal combiné en un signal optique à transmettre.

9. Procédé selon la revendication 8, dans lequel, l'étape de division d'une bande de fréquence de transmission de données en aval en une pluralité de sous-bandes consiste à :
diviser la bande de fréquence de transmission de données en aval en une pluralité de sous-bandes, d'une manière fixe ou variable.

10. Procédé selon la revendication 8, comprenant en outre l'étape consistant à : définir une bande de garde entre les sous-bandes dans le cadre de la division de la bande de fréquence de transmission de données en aval en la pluralité de sous-bandes.

11. Procédé selon la revendication 8, comprenant en outre l'étape dans laquelle : le terminal OLT affecte les sous-bandes pour une unité de réseau optique, ONU.

12. Procédé selon la revendication 11, dans lequel le terminal OLT affecte une largeur de bande d'une sous-bande à une ou plusieurs unités ONU dans le cadre de l'affectation des sous-bandes pour l'unité ONU.

13. Procédé selon la revendication 8, dans lequel l'étape de mise en correspondance et de modulation de données de chaque sous-bande individuellement, et de fourniture en sortie des signaux radiofréquence, comprend les étapes ci-dessous consistant à :
mettre en œuvre une mise en correspondance et une transformée de Fourier rapide inverse sur des données de sous-bandes reçues, et fournir en sortie des signaux numériques ;
convertir les signaux numériques en des signaux analogiques ; et
convertir par élévation les signaux analogiques en une bande de fréquence d'émission occupée par une sous-bande correspondante, et ensuite mettre en œuvre une modulation IQ et fournir en sortie des signaux radiofréquence.

14. Procédé selon la revendication 8, comprenant en outre l'étape dans laquelle :
le terminal OLT reçoit des données en salve en amont d'une pluralité d'unités ONU, et met en œuvre une démodulation et un démappage.
